(19) Europäisches Patentamt
European Patent Office
Office européen des brevets

(11) EP 4 220 843 A1

(12) **EUROPEAN PATENT APPLICATION**
published in accordance with Art. 153(4) EPC

(43) Date of publication:
**02.08.2023 Bulletin 2023/31**

(21) Application number: **21886977.4**

(22) Date of filing: **02.11.2021**

(51) International Patent Classification (IPC):
***H01M 50/409*** *(2021.01)* ***H01M 50/446*** *(2021.01)*
***H01M 50/449*** *(2021.01)*

(52) Cooperative Patent Classification (CPC):
**H01M 50/409; H01M 50/446; H01M 50/449;**
Y02E 60/10

(86) International application number:
**PCT/KR2021/015638**

(87) International publication number:
**WO 2022/092984 (05.05.2022 Gazette 2022/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.11.2020 KR 20200144322**
**01.11.2021 KR 20210148317**

(71) Applicant: **LG Energy Solution, Ltd.**
**Seoul 07335 (KR)**

(72) Inventors:
- **LEE, Kyu Seong**
  **Daejeon 34122 (KR)**
- **KWON, Kyung An**
  **Daejeon 34122 (KR)**

(74) Representative: **Hoffmann Eitle**
**Patent- und Rechtsanwälte PartmbB**
**Arabellastraße 30**
**81925 München (DE)**

(54) **COMPOSITION FOR SEPARATOR FOR NON-AQUEOUS ELECTROLYTE BATTERY, SEPARATOR FOR NON-AQUEOUS ELECTROLYTE BATTERY, AND NON-AQUEOUS ELECTROLYTE BATTERY**

(57) The present disclosure relates to a dispersant composition for a separator of a non-aqueous electrolyte battery, a separator of a non-aqueous electrolyte battery, and a non-aqueous electrolyte battery.

EP 4 220 843 A1

## Description

## [TECHNICAL FIELD]

CROSS-REFERENCE TO RELATED APPLICATION(S)

This application claims the priority benefit of Korean Patent Application No. 10-2020-0144322 filed on November 2, 2020 and Korean Patent Application No. 10-2021-0148317 filed on November 1, 2021 in the Korean Intellectual Property Office, the disclosures of which are incorporated herein by reference in their entirety.

The present disclosure relates to a separator of a non-aqueous electrolyte battery, and a non-aqueous electrolyte battery.

## [BACKGROUND ART]

Recently, as a power source for a mobile terminal such as that of a notebook computer or a cellular phone or as a power source for a hybrid vehicle or an electric vehicle, a non-aqueous electrolyte battery with high voltage and high energy density, in particular a lithium ion secondary battery, is getting the attention. The non-aqueous electrolyte battery typified by a lithium ion secondary battery has high capacity and high energy density so that a large electric current flows at the time of internal short circuit or external short circuit of the battery. Thus, there is a problem that heat is generated in the battery due to Joule heat caused by short circuit, the battery is swelled due to gas generation accompanied with decomposition of an electrolyte solution, and properties of the battery are deteriorated.

According to a current lithium ion secondary battery, in order to resolve such a problem, a separator comprising a porous substrate having fine pores such as a polypropylene or polyethylene film is interposed between a positive electrode and a negative electrode. When the temperature increases owing to the heat generated by short circuit, the separator comprising the porous substrate melts to block the pores. As a result, movement of ions is inhibited so that the current does not flow and runaway of the battery is suppressed.

Because of wider use of a lithium ion secondary battery, a battery having higher heat resistance, in particular improved heat resistance at the time of internal short circuit has been currently required. Particularly, when the internal short circuit occurs, it is believed that the temperature increases to 600°C or more at the short circuit region owing to local heat generation. Thus, in a conventional separator comprising a porous substrate having fine pores such as a polyolefin film, the separator is shrunken or melted by heat generated by the short circuit at the short circuit region so that the battery is exposed to dangers of fuming, ignition and explosion.

As a technology for preventing the short circuit caused by heat shrinkage or heat melting of a separator and improving reliability of a battery, a multilayer separator comprising a heat-resistant porous layer on one or both surfaces (i.e., frond and back surfaces) of a porous substrate having fine pores such as a polyethylene film is suggested.

In such a separator, the heat-resistant porous layer uses an inorganic material and an ethylene-vinyl acetate polymer as a dispersing agent for evenly dispersing the inorganic material. However, although sufficient stability of the separator of the battery may be secured when the dispersant maintains dispersibility at an appropriate level, when the dispersibility is poor, it is difficult to secure sufficient thermal stability of the separator because the inorganic substance is not evenly dispersed.

Therefore, there is a need for research on a separator having excellent safety in a high-temperature environment while being excellent in adhesive strength and dispersibility.

## [DETAILED DESCRIPTION OF THE INVENTION]

### [Technical Problem]

It is one object of the present disclosure to provide a separator of a non-aqueous electrolyte battery, the separator capable of strongly adhering an inorganic filler upon forming a heat-resistant porous layer of the separator, as well as being excellent in safety in a high-temperature environment and thus having high safety in the event of an accident such as fuming, ignition or explosion, while further improving the heat resistance of the separator by effectively dispersing the inorganic filler, and a non-aqueous electrolyte battery,

### [Technical Solution]

Provided herein is a dispersant composition for a separator of a non-aqueous electrolyte battery, comprising a polymer containing a first repeating unit represented by the following Chemical Formula 1, a second repeating unit represented by the following Chemical Formula 2, and a third repeating unit represented by the following Chemical

Formula 3:

[Chemical Formula 1]

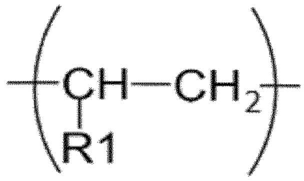

in Chemical Formula 1, R1 is hydrogen or an alkyl having 1 to 8 carbon atoms,

[Chemical Formula 2]

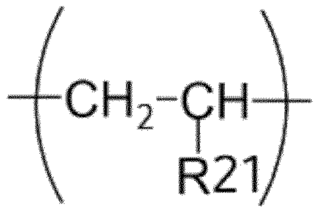

in Chemical Formula 2, R21 is an acetate ($CH_3COO$-) group,

[Chemical Formula 3]

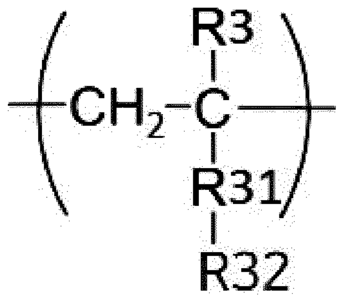

in Chemical Formula 3, R3 is hydrogen or an alkyl having 1 to 5 carbon atoms, R31 is an alkylene having 1 to 5 carbon atoms or -(C=O)O-, R32 is a group containing an unsaturated functional group,
at least a part of R32 is capable of forming a crosslinking bond with other repeating units in the copolymer.

According to one embodiment of the present disclosure, the R32 may include one or more unsaturated functional groups selected from the group consisting of a vinyl group, a (meth)acrylate group, an oxetanyl group, and a glycidyl group.
More specifically, the R32 may include one or more selected from the group consisting of the following Chemical Formulas:

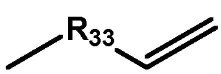 , 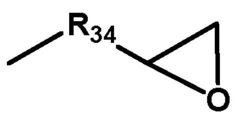 , 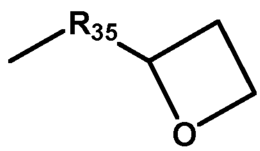 ,

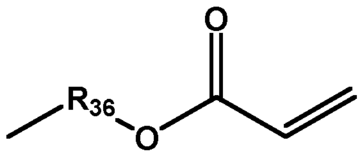, and 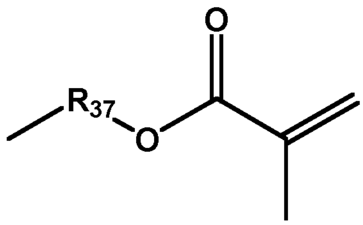

wherein, R33 to R37 are each independently a single bond, or a linear or branched alkylene having 1 to 5 carbon atoms.

In the flame-retardant group-containing polymer, a ratio of the repeating number of the first repeating unit to the total repeating number of the first to third repeating units, i.e., a ratio of the repeating units derived from an alkene-based monomer may be about 0.01 to about 0.5, the lower limit value thereof may be about 0.01 or more, or about 0.05 or more, or about 0.1 or more, and the upper limit value thereof may be about 0.5 or less, or about 0.3 or less, or about 0.2 or less.

Further, in the flame-retardant group-containing polymer, a ratio of the repeating number of the second repeating unit to the total repeating number of the first to third repeating units, i.e., a ratio of the repeating units derived from a vinyl acetate-based monomer may be about 0.4 to about 0.95, the lower limit value thereof may be about 0.4 or more, or about 0.5 or more, or about 0.6 or more, and the upper limit value thereof may be about 0.95 or less, or about 0.85 or less, or about 0.8 or less.

In the flame-retardant group-containing polymer, a ratio of the repeating number of the third repeating unit to the total repeating number of the first to third repeating units, i.e., a ratio of the repeating units into which flame retardant groups are introduced may be about 0.01 to about 0.3, the lower limit value thereof may be about 0.01 or more, or about 0.05 or more, or about 0.1 or more, or about 0.13 or more, and the upper limit value thereof may be about 0.3 or less, or about 0.2 or less, or about 0.17 or less.

According to another embodiment of the present disclosure, the weight average molecular weight value of the flame retardant group-containing polymer may be 100,000 to 500,000 g/mol, the lower limit thereof may be about 100,000 g/mol or more, or about 150,000 g/mol or more, or about 250,000 g/mol or more, and the upper limit thereof may be about 500,000 g/mol or less, or about 400,000 g/mol or less, or about 350,000 g/mol or less.

The dispersant composition for a separator of a non-aqueous electrolyte battery may further include an inorganic filler.

At this time, the inorganic filler may comprise one or more selected from the group consisting of inorganic oxides, inorganic nitrides, poorly soluble ionic crystal fine particles, covalently bonded crystals, clay, materials derived from mineral resources, lithium titanium phosphate, and a combination thereof.

Meanwhile, according to another embodiment of the present disclosure, there is provided a separator of a non-aqueous electrolyte battery, the separator comprising: a porous substrate, and a heat resistant porous layer formed on one surface of the porous substrate, wherein the heat resistant porous layer comprises the above-mentioned dispersant composition for a separator of a non-aqueous electrolyte battery.

At this time, the porous substrate may comprise one or more resins selected from the group consisting of a polyolefin resin, a polyester resin, a polyacetal resin, a polyamide resin, a polycarbonate resin, a polyimide resin, a polyetheretherketone resin, a polyethersulfone resin, and a combination thereof.

Meanwhile, according to yet another embodiment of the present disclosure, there is provided a non-aqueous electrolyte battery comprising: a positive electrode, a negative electrode, the separator of a non-aqueous electrolyte battery, and an electrolyte solution.

The terms "first," "second," etc. are used to explain various elements, and these terms are only used to distinguish one constitutional element from the other constitutional elements.

The technical terms used herein is for the purpose of describing exemplary embodiments only and is not intended to limit the scope of the invention. The singular forms "a," "an" and "the" are intended to include plural forms, unless the context clearly indicates otherwise. It should be understood that the terms "comprise," "include", "have", etc. are used herein to specify the presence of stated features, integers, steps, components or combinations thereof, but do not preclude the presence or addition of one or more other features, integers, steps, components, or combinations thereof.

Also, as used herein, in case a layer or an element is mentioned to be formed "on" layers or elements, it means that the layer or element is directly formed on the layers or elements, or it means that other layers or elements may be additionally formed between the layers, on a subject, or on a substrate.

Although the present disclosure may have various forms and various modifications can be made thereto, specific examples will be exemplified and explained in detail. However, it is not intended to limit the present disclosure to disclosed forms, and it should be understood that all the modifications, equivalents or substitutions within the idea and technical scope of the present disclosure are included in the present disclosure.

Now, a composition, a separator of a non-aqueous electrolyte battery comprising the same, and a non-aqueous electrolyte battery according to specific embodiments of the present disclosure will be described in more detail.

## Polymer and Composition

According to an embodiment of the present disclosure, there is provided a dispersant composition for a separator of a non-aqueous electrolyte battery, comprising a polymer containing a first repeating unit represented by the following Chemical Formula 1, a second repeating unit represented by the following Chemical Formula 2, and a third repeating unit represented by the following Chemical Formula 3:

[Chemical Formula 1]

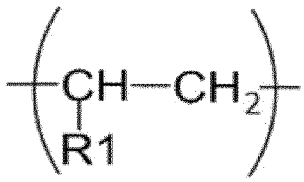

in Chemical Formula 1, R1 is hydrogen or an alkyl having 1 to 8 carbon atoms,

[Chemical Formula 2]

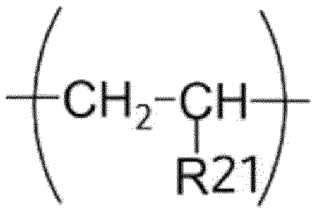

in Chemical Formula 2, R21 is an acetate ($CH_3COO$-) group,

[Chemical Formula 3]

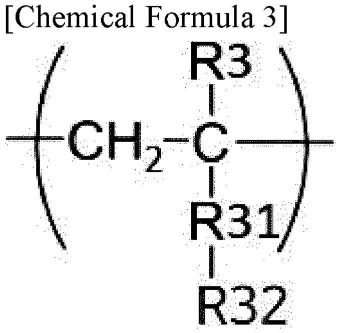

in Chemical Formula 3, R3 is hydrogen or an alkyl having 1 to 5 carbon atoms, R31 is an alkylene having 1 to 5 carbon atoms or -(C=O)O-, R32 is a group containing an unsaturated functional group,
at least a part of R32 is capable of forming a crosslinking bond with other repeating units in the copolymer.

As used herein, the unsaturated functional group means a group containing an ethylenically unsaturated bond such as a carbon-carbon double bond, or a group containing acetylenically unsaturated bonds such as carbon-carbon triple bonds, or an unsaturated group containing heteroatoms other than carbon, such as epoxy.

The present inventors have confirmed through experiments that, in a polymer used as a dispersant of an inorganic filler in a heat-resistant porous layer of a separator of a non-aqueous electrolyte battery, a crosslinkable unsaturated functional group is introduced into the polymer side chain and further a ratio of respective repeating units constituting the polymer, i.e., a degree of introduction of ethylene-based, vinyl acetate-based, and unsaturated functional groups, is controlled, whereby the adhesion of the inorganic filler can be enhanced and the dispersibility of the inorganic filler can be increased, thus increasing the heat resistance of the separator, and at the same time, high-temperature

stability of the separator itself can be improved, thereby completing the present disclosure.

It is well known that in a separator of a non-aqueous electrolyte battery, a cyanoethyl group-containing polymer or a flame retardant group-containing polymer acts as a binder for firmly adhering the inorganic filler. However, a method of imparting properties such as a crosslinking bond between repeating units by introducing a functional group into the side chain of such a polymer is not known in detail.

The polymer used in the composition according to an aspect of the present disclosure acts as a binder to firmly adhere the inorganic filler upon forming a heat-resistant porous layer of a separator, and also plays a role as a dispersant capable of effectively dispersing the inorganic filler, particularly a crosslinking bond is formed between respective repeating units or polymer chains, making it possible to realize a separator having significantly improved bonding properties and high-temperature stability as compared with the prior art.

According to one aspect of the present disclosure, there is provided a dispersant composition for a separator of a non-aqueous electrolyte battery, comprising a polymer containing a first repeating unit represented by the following Chemical Formula 1, a second repeating unit represented by the following Chemical Formula 2, and a third repeating unit represented by the following Chemical Formula 3:

[Chemical Formula 1]

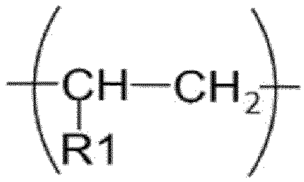

in Chemical Formula 1, R1 is hydrogen or an alkyl having 1 to 8 carbon atoms,

[Chemical Formula 2]

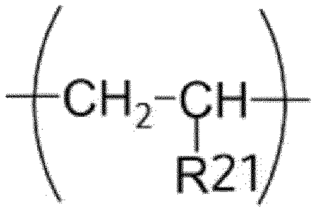

in Chemical Formula 2, R21 is an acetate ($CH_3COO$-) group,

[Chemical Formula 3]

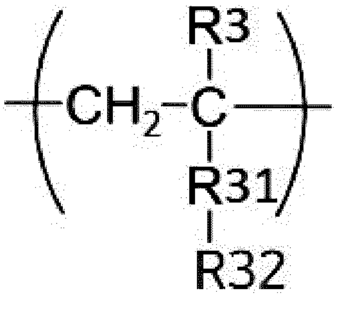

in Chemical Formula 3, R3 is hydrogen or an alkyl having 1 to 5 carbon atoms, R31 is an alkylene having 1 to 5 carbon atoms or -(C=O)O-, R32 is a group containing an unsaturated functional group,

at least a part of R32 is capable of forming a crosslinking bond with other repeating units in the copolymer.

In such a flame retardant group-containing polymer, the repeating unit represented by Chemical Formula 1 can be deemed to be a repeating unit derived from alpha olefins such as ethylene, propylene, butene, that is, an alkene-based monomer, and these monomers may be specifically represented by the following Chemical Formula 1-1.

[Chemical Formula 1-1] $R1\text{-}CH{=}CH_2$

in Chemical Formula 1-1, R1 is as defined in Chemical Formula 1 above.

Further, the repeating unit represented by Chemical Formula 2 can be deemed to be ii) a repeating unit derived from a vinyl acetate-based monomer, and such a monomer may be specifically represented by the following Chemical Formula 2-1.

[Chemical Formula 2-1] $CH_2$=CH-R21

in Chemical Formula 2-1, R21 is as defined in Chemical Formula 2 above.

A copolymer in which vinyl acetate or vinyl alcohol-based repeating unit is introduced into an ethylene repeating unit, or a copolymer in which a cyanoethyl group is further introduced therein is commonly used for bonding and dispersing a substrate component and an inorganic filler in a separator of a non-aqueous electrolyte battery. In particular, the carbonyl group of vinyl acetate can improve the dispersibility of the inorganic filler by interacting with the inorganic filler.

Further, the repeating unit represented by Chemical Formula 3 can be considered to be derived from i) a vinyl-based monomer into which an unsaturated functional group is introduced, or ii) a (meth)acrylate-based monomer into which an unsaturated functional group is introduced, and such a monomer may be specifically represented by the following Chemical Formula 3-1.

[Chemical Formula 3-1]

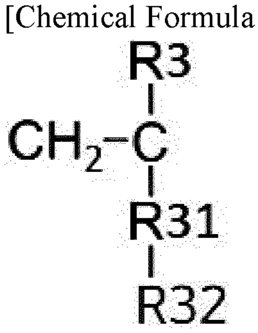

in Chemical Formula 3-1, R3, R31 and R32 are as defined in Chemical Formula 3 above.

According to one embodiment of the present disclosure, the R32 may include one or more unsaturated functional groups selected from the group consisting of a vinyl group, a (meth)acrylate group, an oxetanyl group, and a glycidyl group.

According to one embodiment of the present disclosure, the R32 may include one or more selected from the group consisting of the following Chemical Formulas:

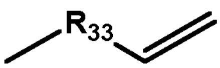 , 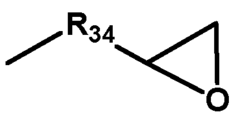 , 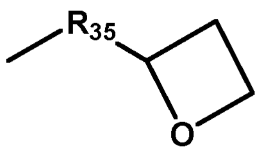 ,

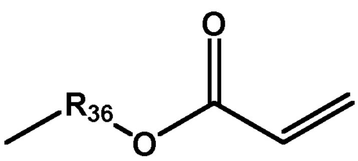 , and 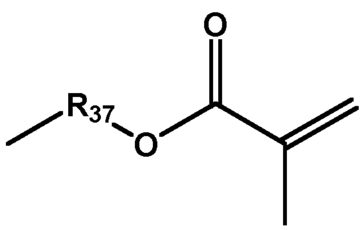

wherein, R33 to R37 are each independently a single bond, or a linear or branched alkylene having 1 to 5 carbon atoms.

In this case, it may be more preferable that R1 and R2 are each independently hydrogen, an ammonium ion, an alkyl group having 1 to 5 carbon atoms, or a phenyl group.

At least a part of these unsaturated functional groups may form a crosslinking bond with other repeating units, specifically, for example, the repeating units of Chemical Formulas 1 to 3, during a polymerization reaction for forming a polymer.

This crosslinking bond makes the molecular structure of the polymer more robust, and a separator to which such a polymer is applied can have higher stability than the conventional one even in a high-temperature environment.

In the flame retardant group-containing polymer, the ratio of the repeating number of the first repeating unit to the total repeating number of repeating units of the first to third repeating units, that is, the ratio of the repeating units derived from an alkene-based monomer may be about 0.01 to about 0.5, the lower limit value thereof may be about 0.01 or more, or about 0.05 or more, or about 0.1 or more, and the upper limit value thereof may be about 0.5 or less, or about 0.3 or less, or about 0.2 or less.

When the ratio of the repeating number of the first repeating unit, that is, the ratio of repeating units derived from an alkene-based monomer is too low, there may be a problem that the polymer has high flowability and thus, pores are not easily formed in the separator. When the ratio is too high, the solubility in the solvent for producing the separator is lowered, which may cause problems in the production process.

Further, in the flame retardant group-containing polymer, the ratio of the repeating number of the second repeating unit to the total repeating number of repeating units of the first to third repeating units, that is, the ratio of the repeating units derived from an vinyl acetate-based monomer may be about 0.4 to about 0.95, the lower limit value thereof may be about 0.4 or more, or about 0.5 or more, or about 0.6 or more, and the upper limit value thereof may be about 0.95 or less, or about 0.85 or less, or about 0.8 or less.

When the ratio of the repeating number of the second repeating unit, that is, the ratio of repeating units derived from a vinyl acetate-based monomer is too low, there may be a problem that an adhesive strength in the separator is low, and thus it is easily separated from the separator or electrode. When the ratio is too high, there may be a problem that the polymer has high flowability and thus, pores are not easily formed in the separator.

Further, in the flame retardant group-containing polymer, the ratio of the repeating number of the third repeating unit to the total repeating number of repeating units of the first to third repeating units, that is, the ratio of the repeating units into which the flame retardant group is introduced may be about 0.01 to about 0.3, the lower limit value thereof may be about 0.01 or more, or about 0.05 or more, or about 0.1 or more, or about 0.13 or more, and the upper limit value thereof may be 0.3 or less, or about 0.2 or less, or about 0.17 or less.

When the ratio of the repeating number of the third repeating unit, that is, the ratio of repeating units into which the flame retardant group is introduced is too low, there may be a problem that the pores formed in the separator may not maintain their shape at high temperatures, and may flow down and clog. When the ratio is too high, there may be a problem that due to the low adhesive strength in the separator, it is easily separated from the separator or electrode, and a crosslinking bond occurs before pores are formed, so the pores are not formed properly.

Such a flame retardant group-containing polymer can be prepared by copolymerization of i) alpha olefins such as ethylene, propylene, butene, that is, alkene - based monomers, ii) a vinyl acetate-based monomer, and iii) a vinyl-based monomer or a (meth)acrylate-based monomer further having the above-mentioned separate unsaturated functional group.

At the time of polymerization, a solution polymerization method can be used in which each monomer is added to a solvent to prepare a monomer mixture for polymerization, and the polymerization reaction is performed in the presence of an initiator.

At this time, as the solvent, solvents that do not affect the polymerization reaction of the monomers, for example, an alcohol-based solvent such as water, methanol, ethanol, isopropanol, butanol, isobutanol, a ketone solvent such as dimethyl ketone, diethyl ketone, methyl ethyl ketone, and methyl isobutyl ketone, an aromatic solvent such as toluene and xylene, and the like, can be used without particular limitation.

The solvent is preferably used in an amount of about 50 to about 500 parts by weight based on 100 parts by weight of the total monomer for smooth progress of the polymerization reaction.

Further, the polymerization initiator used during polymerization is a radical photopolymerization or thermal polymerization initiator commonly used for the polymerization reaction of the above-mentioned monomers, and the type thereof is not particularly limited. However, it may be preferable to use a thermal polymerization initiator in order to smoothly proceed the polymerization reaction.

Specifically, the thermal polymerization initiator may include, for example, azo-based or peroxide-based initiators, such as 2,2'-azobisisobutyronitrile (AIBN), 2,2'-azobis- (2,4-dimethylvaleronitrile), 2,2'-azobis-(4-methoxy-2,4-dimethylvaleronitrile), benzoyl peroxide, lauroyl peroxide, t-butylperoxypivalate and 1,1'-bis-(bis-t-butylperoxy)cyclohexane.

The initiator may be used in an amount of about 0.05 to 5 parts by weight, or about 0.1 to about 3 parts by weight, based on 100 parts by weight of the total monomer.

These initiators can be prepared in a state of being contained in the above-described monomer mixture from the beginning, or it may be added separately after raising the temperature of the previously prepared monomer mixture to an appropriate polymerization temperature. In a state in which the polymerization reaction is completed and the polymer is formed, or in the subsequent production step of the separator, it may be separately added for forming an additional crosslinking bond.

The temperature of the polymerization reaction may proceed from room temperature to about 100°C, and it may preferably proceed at a temperature of about 40°C or more, or about 50°C or more, and about 90°C or less, or

about 80°C or less.

According to another embodiment of the present disclosure, the weight average molecular weight value of the flame retardant group-containing polymer may be 100,000 to 1,000,000 g/mol, the lower limit thereof may be about 100,000 g/mol or more, or about 150,000 g/mol or more, or about 250,000 g/mol or more, and the upper limit thereof may be about 1,000,000 g/mol or less, or about 700,000 g/mol or less, or about 500,000 g/mol or less, or about 400,000 g/mol or less, or about 350,000 g/mol or less.

Due to the complex factors such as the ratio of each repeating unit, the molecular weight of the polymer, and the like, the adhesion of the inorganic filler can be improved, and the inorganic filler can be effectively dispersed.

In this regard, the weight average molecular weight value may be measured by gel permeation chromatography (GPC) using polystyrene standards.

And, the above-mentioned polymer is used in the dispersant composition for a separator of a non-aqueous electrolyte battery.

The dispersant composition for a separator of a non-aqueous electrolyte battery may further include an inorganic filler.

The inorganic filler is not particularly limited as long as it has a melting point of about 200°C or more, has high electrical insulation, is electrochemically stable, and is stable in an electrolyte solution or a solvent used for a slurry for forming a heat-resistant porous layer.

The inorganic filler may include one or more selected from the group consisting of inorganic oxides, inorganic nitrides, poorly soluble ionic crystal fine particles, covalently bonded crystals, clay, materials derived from mineral resources, lithium titanium phosphate, and combinations thereof.

More specifically, the inorganic filler may include, for example, fine particles of inorganic oxides such as iron oxide, $SiO_2$ (silica), $Al_2O_3$ (alumina), $TiO_2$, $BaTiO_3$, ZrO, $PB(Mg_3Nb_{2/3})O_3$-$PbTiO_3$(PMN-PT), hafnia ($HfO_2$), $SrTiO_3$, $SnO_2$, $CeO_2$, MgO, NiO, CaO, ZnO, $ZrO_2$, $Y_2O_3$, etc.; fine particles of inorganic nitrides such as aluminum nitride, silicon nitride, etc.; fine particles of poorly soluble ionic crystals such as calcium fluoride, barium fluoride, barium sulfate, etc.; fine particles of covalent crystals such as silicon, diamond, etc.; fine particles of clay such as talc, montmorillonite, etc.; a material derived from a mineral such as boehmite, zeolite, apatite, kaolin, mullite, spinel, olivine, sericite, bentonite, etc., or lithium titanium phosphate ($Li_xTi_y(PO_4)_3$, wherein x and y are numbers satisfying $0<x<2$ and $0<y<3$, respectively); and any combination thereof.

The particle diameter of the inorganic filler is not particularly limited, but in order to form a heat-resistant porous layer of uniform thickness and at the same time obtain an appropriate porosity, those having an average particle diameter of about 5 nm to about 5 $\mu$m may be used, preferably, from about 0.01 to about 1 $\mu$m may be used.

Meanwhile, the mean particle diameter herein may be measured by a device based on a laser diffraction scattering method.

When the particle diameter of the inorganic filler is too small, there is a problem in that dispersibility is lowered and thus it may be difficult to adjust the physical properties of the separator.

When the particle diameter of the inorganic filler is too large, there is a problem that strength of the heat-resistant porous layer is lowered and smoothness of the surface tends to get deteriorated. In addition, the heat-resistant porous layer becomes thicker, and thus it is apprehended that the mechanical properties are lowered.

Further, the composition used to form a heat-resistant porous layer in a separator of a non-aqueous electrolyte battery may include the above-described flame retardant group-containing polymer, and if necessary, a resin such as cyanoethyl-containing polymer, ethylene-vinyl acetate copolymer (EVA, containing 20 to 35 mol % of repeating unit derived from vinyl acetate), acrylate copolymer, styrene butadiene rubber (SBR), polyvinyl butyral (PVB), polyvinyl pyrrolidone (PVP), polyurethane, polyvinylidene fluoride-hexafluoropropylene, polyvinylidene fluoride-trichlorethylene, polyvinylidene fluoride-chlorotrifluoroethylene copolymer, polyvinylidene fluoride-hexafluoropropylene, polyvinylidene fluoride-trichloroethylene, cellulose acetate, cellulose acetate butyrate, cellulose acetate propionate, and the like.

When these resins are further used, the resin may be mixed in an amount of about 10 to about 1,000 parts by weight with respect to 100 pars by weight of the flame retardant group-containing polymer.

Meanwhile, according to yet another aspect of the present disclosure, there is provided a separator of a non-aqueous electrolyte battery, the separator comprising: a porous substrate, and a heat resistant porous layer formed on one surface of the porous substrate, wherein the heat resistant porous layer comprises the above-mentioned dispersant composition for a separator of a non-aqueous electrolyte battery.

The heat-resistant porous layer may further include an inorganic filler.

Specifically, the separator of a non-aqueous electrolyte battery of the present disclosure may be a separator including a heat-resistant porous layer including the dispersant composition and an inorganic filler, and a porous substrate, wherein the heat-resistant porous layer may be formed on one surface or both surfaces of the porous substrate, and the inside of the heat-resistant porous layer may have many pores resulting from the voids present among inorganic fillers.

When the heat-resistant porous layer is formed on one surface of the porous substrate, the heat resistant-porous layer may be formed on either a positive electrode side or a negative electrode side surface.

Meanwhile, a method of forming the heat-resistant porous layer is not particularly limited. For example, the heat-resistant porous layer may be formed by dispersing the inorganic filler in the dispersant composition to prepare a slurry, coating the slurry onto the porous substrate, and then drying and removing the solvent.

Here, the solvent used in the dispersant composition is not particularly limited as long as the above-mentioned flame retardant group-containing polymer is dissolved therein. Examples of the solvent may include acetone, tetrahydrofuran, cyclohexanone, ethylene glycol monomethyl ether, methyl ethyl ketone, acetonitrile, furfuryl alcohol, tetrahydrofurfuryl alcohol, methyl acetoacetate, nitromethane, N,N-dimethylformamide (DMF), N-methyl-2-pyrrolidone, γ-butyrolactone, propylene carbonate, and the like.

The solvent may be used in an amount of about 300 parts by weight to about 5,000 parts by weight with respect to 100 parts by weight of the flame retardant group - containing polymer and the resin.

As for the method of dispersing the inorganic filler in the above-mentioned dispersant composition, a known method of using a stirrer, a disperser, a pulverizer, or the like may be employed. In particular, a ball mill method may be used.

A relative content ratio between the dispersant composition and the inorganic filler in the slurry is not particularly limited, but it may be adjusted according to the thickness, the average pore diameter, and porosity of the heat-resistant porous layer to be prepared.

Specifically, the content of the inorganic filler in the heat-resistant porous layer may be about 50% by weight or more, or about 95% by weight or less.

When the content of the inorganic filler is too low, there is problem that a pore proportion in the heat-resistant porous layer becomes small and thus the battery performance may be deteriorated or sufficient heat resistance may not be obtained. When the content of the inorganic filler is too high, there is problem that the heat resistant-porous layer may become brittle and thus it may be difficult to handle.

Meanwhile, the heat-resistant porous layer may have low resistance because the pores ensure a route for ionic conduction. The average pore diameter is not particularly limited as long as it is large enough for the lithium ions contained in an electrolyte solution described below to pass through. The average pore diameter may be about 5 nm to about 5 $\mu$m, and preferably, about 0.1 to about 3 $\mu$m from the viewpoint of mechanical strength of the heat-resistant porous layer. The porosity may be in the range of about 5 to about 95%, and preferably, about 20 to about 70%.

Here, the average pore diameter may be measured by using a mercury intrusion porosimeter. The porosity may be calculated based on the following Equation, after obtaining true density (d) of an inorganic filler, volume (v) of a heat-resistant porous layer, and weight (m) of a heat-resistant porous layer.

$$\text{Porosity (\%)}=\{1-m/(vd)\}\ x100$$

The heat-resistant porous layer having an average pore diameter and a porosity in the above range may be obtained by controlling the particle diameter or the content of the inorganic filler, as described above.

Meanwhile, the porous substrate may include a thermoplastic resin component.

The thermoplastic resin component may melt to close the pores in the porous substrate if the temperature becomes higher than a certain limit, whereby ion movement is blocked, an electric current may stop, and heat generation or ignition may be suppressed.

The thermoplastic resin used as the porous substrate may include polyolefin resins such as low density polyethylene, high density polyethylene, ultra-high molecular weight polyethylene, polypropylene, etc.; polyester resins such as polyethylene terephthalate, polybutylene terephthalate, etc.; polyacetal resins; polyamide resins; polycarbonate resins; polyimide resins; polyether ether ketone resins; polyether sulfone resins; and any combination thereof.

Meanwhile, the porous substrate may be preferably a film. Although the thickness thereof is not particularly limited, it is preferably about 2 $\mu$m to about 50 $\mu$m. When the thickness is too thin, there is a problem that it is difficult to maintain the mechanical properties. When the thickness is too thick, there is a problem that it may function as a resistant layer.

Although the average pore diameter and the porosity of the porous substrate are not particularly limited, the average pore diameter may be preferably about 0.1 to about 30 $\mu$m and the porosity may be preferably about 10% to about 90%.

When the pore size is too small or the porosity is too low, there is a problem in that the ion conductivity may deteriorate, and when the average pore diameter is too large or the porosity is too high, there is a problem that mechanical strength may deteriorate, and thus the substrate may not function as a substrate.

The average pore diameter may be measured in the same manner as that for the heat-resistant porous layer. Meanwhile, the porosity may be calculated based on the following Equation, after obtaining true density (d) of a porous substrate, volume (v) of the porous substrate, and weight (m) of a porous substrate.

$$\text{Porosity (\%)} = \{1 - m/(vd)\} \times 100$$

Meanwhile, a method of coating the slurry onto the porous substrate may include a coating method commonly used in the art, and is not particularly limited as long as it can achieve a desirable film thickness or a coating area. Examples of the method may include a gravure coater method, a reverse roll coater method, a transfer roll coater method, a kiss coater method, a dipping coater method, a knife coater method, an air doctor coater method, a blade coater method, a rod coater method, a squeeze coater method, a cast coater method, a die coater method, a screen printing method, a spray coating method, and the like.

The total thickness of the separator of a non-aqueous electrolyte battery thus obtained is not particularly limited and may be adjusted in consideration of application and performance of the battery. It may be preferably in the range of about 2 to about 55 $\mu$m from the viewpoint of ensuring separation between a positive electrode and a negative electrode.

## Non-Aqueous Electrolyte Battery

Meanwhile, the non-aqueous electrolyte battery according to an aspect of the present disclosure may include a positive electrode, a negative electrode, the above-mentioned separator of a non-aqueous electrolyte battery, and an electrolyte solution.

Specifically, the separator of a non-aqueous electrolyte battery is disposed between the positive electrode and the negative electrode, and immersed in an electrolyte solution to produce a non-aqueous electrolyte battery.

When the separator of a non-aqueous electrolyte battery in which the heat-resistant porous layer is formed on one surface of the porous substrate is used, the separator may be disposed in such a manner that the surface of the heat-resistant porous layer faces any side of the positive electrode and negative electrode.

The non-aqueous electrolyte battery of the present disclosure may include, for example, a lithium secondary battery such as a lithium metal secondary battery, a lithium ion secondary battery, a lithium polymer secondary battery, a lithium ion polymer secondary battery, and the like.

Meanwhile, the positive electrode and the negative electrode may be generally manufactured by coating an electrode current collector with an electrode mixture prepared by dispersing a positive electrode or negative electrode active material and a conductive aid in a binder solution.

The positive electrode active material may include a lithium-containing transition metal oxide having a layered structure, represented by Chemical Formula of $Li_{1+x}MO_2$($-0.1<x<0.1$, M: Co, Ni, Mn, Al, Mg, Zr, Ti, Sn, etc.); a lithium manganese oxide having a spinel structure such as $LiMn_2O_4$ or a composition having part thereof substituted with one or more of the other elements; and an olivine type compound represented by $LiMPO_4$(M: Co, Ni, Mn, Fe, etc.).

The lithium-containing transition metal oxide having a layered structure may include, for example, $LiCoO_2$ or $LiNi_{1-x}Co_{x-y}Al_yO_2$($0.1\leq x\leq 0.3$, $0.01\leq y\leq 0.2$), and an oxide containing at least Co, Ni, and Mn ($LiMn_{1/3}Ni_{1/3}Co_{1/3}O_2$, $LiMn_{5/12}Ni_{5/12}Co_{1/6}O_2$, $LiNi_{3/5}Mm_{1/5}Co_{1/5}O_2$, etc.).

Meanwhile, the negative electrode active material may include, for example, a lithium metal, a lithium alloy such as lithium aluminum alloy, etc., a carbonaceous material capable of storing and releasing lithium, graphite, cokes such as a phenol resin, a furan resin, etc., carbon fibers, glass-like carbon, pyrolytic carbon, active carbon, and the like.

Meanwhile, the positive electrode current collector may include, for example, a thin metal foil made of aluminum, nickel, or a combination thereof. The negative electrode current collector may include, for example, a thin metal foil made of copper, gold, nickel, copper alloy, or a combination thereof.

Meanwhile, the conductive aid may include, for example, carbon black such as acetylene black, ketjen black, etc.; metal fibers such as aluminum, nickel, etc.; natural graphite, heat-expanding graphite, carbon fibers, ruthenium oxide, titanium oxide, etc. Among them, acetylene black or ketjen black may be preferably used, as it may provide desired conductivity with addition of a small amount thereof.

Meanwhile, the binder may include various known binders. Examples thereof may include polytetrafluoroethylene, polyvinylidene fluoride, carboxymethyl cellulose, a cross-linked polymer of fluoroolefin copolymers, styrene-butadiene copolymer, polyacrylonitrile, polyvinyl alcohol, and the like.

The binder may include those dissolved in a solvent. Examples of the solvent may include N-methyl-2-pyrrolidone (NMP).

Meanwhile, as for the electrolyte solution, a solution in which a lithium salt is dissolved in an organic solvent may be used. The lithium salt is not particularly limited as long as it dissociates in a solvent to form $Li^+$ ion and does not easily cause a side reaction such as decomposition within the voltage range in which the battery is used.

For example, an inorganic lithium salt such as $LiClO_4$, $LiPF_6$, $LiBF_4$, $LiAsF_6$, $LiSbF_6$, etc., and an organolithium salt such as $LiCF_3SO_3$, $LiCF_3CO_2$, $Li_2C_2F_4(SO_3)_2$, $LiN(CF_3SO_2)_2$, $LiC(CF_3SO_2)_3$, $LiCnF_{2n+1}SO_3$($n\geq 2$), $LiN(RfOSO_2)_2$, etc. (wherein Rf represents a fluoroalkyl group) may be used. Preferred examples of the lithium salt may include $LiPF_6$, $LiClO_4$, $LiAsF_6$, $LiBF_4$, $LiCF_3SO_3$, $Li(CF_3SO_2)_2N$.

Meanwhile, the organic solvent used for the electrolyte solution is not particularly limited as long as it may dissolve the lithium salt and does not cause a side reaction such as decomposition within the voltage range in which the battery is used. For example, cyclic carbonate esters such as propylene carbonate, ethylene carbonate, etc., chain carbonate esters such as ethyl methyl carbonate, diethyl carbonate, dimethyl carbonate, dipropyl carbonate, and the like, or a mixture thereof may be exemplified, but are not limited thereto.

When a mixture of the cyclic carbonate ester and the chain carbonate ester is used, a volume ratio of the cyclic carbonate ester to the chain carbonate ester is preferably about 4:1 to about 1:4 from the viewpoint of optimizing the permittivity and viscosity.

Meanwhile, a shape of the non-aqueous electrolyte battery of the present disclosure may include a prism type or a cylindrical type, in which a steel can or an aluminum can is used as a casing (i.e., can casing). Further, it may be a package battery, in which a metal-deposited laminate film is used as a casing, but is not particularly limited thereto.

**[Advantageous Effects]**

A separator composition for a non-aqueous electrolyte battery of the present disclosure can strongly adhere an inorganic filler upon forming a heat-resistant porous layer of a separator, can also further improve heat resistance of the separator by effectively dispersing the inorganic filler, and can have excellent safety even in a high-temperature environment.

**[DETAILED DESCRIPTION OF THE EMBODIMENTS]**

Hereinafter, the actions and effects of the present invention will be described in more detail with reference to the specific exemplary embodiments of the present invention. However, these exemplary embodiments are for illustrative purposes only, and the scope of the present invention is not intended to be limited thereby.

**<EXAMPLE>**

**Preparation of Polymer**

**<Synthesis Example 1>**

1500 g of vinyl acetate was added to a 3L reactor, to which 200 g of methanol was further added. 200 g of ethylene was added thereto while stirring, and then it was waited until the ethylene was dissolved in the solution and the reactor pressure was stabilized.

The temperature of the reactor was raised to about 60°C, and an initiator solution in which 0.5 g of initiator AIBN was dissolved in 50 g of methanol was added to the reactor. At this time, the internal pressure of the reactor was 30 bar.

The polymerization temperature was kept constant, and the polymerization reaction proceeded for about 5 hours. After the reaction was completed, a reaction terminator solution in which 0.5 g of sorbic acid was dissolved in 50 g of methanol was added to the reactor.

The reactor was cooled to room temperature, and slowly vented to remove unreacted ethylene, and a polymerization product was obtained from the lower part of the reactor.

The obtained polymerization product was dried in a vacuum oven set at 75°C for about 24 hours to remove unreacted monomers and methanol. Thereby, an ethylene-vinyl acetate copolymer was obtained.
(Mw: 300,000, ethylene fraction: 20 mol%)

**<Synthesis Example 2>**

1350 g of vinyl acetate and 150 g of glycidyl acrylate were added to a 3L reactor, to which 200 g of methanol was further added thereto. 200 g of ethylene was added thereto while stirring, it was waited until the ethylene was dissolved in the solution and the reactor pressure was stabilized.

The temperature of the reactor was raised to about 60°C, and an initiator solution in which 0.5 g of initiator AIBN was dissolved in 50 g of methanol was added to the reactor. At this time, the internal pressure of the reactor was 30 bar.

The polymerization temperature was kept constant, and the polymerization reaction proceeded for about 5 hours. After the reaction was completed, a reaction terminator solution in which 0.5 g of sorbic acid was dissolved in 50 g of methanol was added to the reactor.

The reactor was cooled to room temperature, and slowly vented to remove unreacted ethylene, and a polymerization product was obtained from the lower part of the reactor.

The obtained polymerization product was dried in a vacuum oven set at 75°C for about 24 hours to remove unreacted monomers and methanol. Thereby, an ethylene-vinyl acetate-glycidyl acrylate copolymer was obtained. (Mw: 320,000, ethylene fraction: 20 mol%, vinyl acetate fraction: 73 mol%, glycidyl acrylate fraction: 7 mol%)

## Production of dispersant composition (slurry) and separator

### <Comparative Example 1>

Alumina having an average particle diameter of 0.7 $\mu$m and a BET of 4 m2/g were dispersed in acetone. The copolymer prepared in Synthesis Example 1 and the alumina dispersion were mixed in a weight ratio of polymer: alumina = 20: 80, and two types of zirconia beads were used (0.5 mm: 1 mm = 1:1), pulverized and mixed in a ball mill for 20 minutes to prepare a slurry.

The slurry prepared above was applied onto one surface of a polyethylene porous substrate using a doctor blade, and dried to produce a separator on which a coating layer was formed.

### <Comparative Example 2>

Alumina having an average particle diameter of 0.7 $\mu$m and a BET of 4 m2/g were dispersed in acetone. Polyvinylidene fluoride (Mw: 400,000) and the alumina dispersion were mixed in a weight ratio of polymer: alumina = 20: 80, and two types of zirconia beads were used (0.5 mm: 1mm=1:1), pulverized and mixed in a ball mill for 20 minutes to prepare a slurry.

The slurry prepared above was applied onto one surface of a polyethylene porous substrate using a doctor blade, and dried to produce a separator on which a coating layer was formed.

### <Example 1>

Alumina having an average particle diameter of 0.7 $\mu$m and a BET of 4 m2/g were dispersed in acetone. The copolymer prepared in Synthesis Example 2 and the alumina dispersion were mixed in a weight ratio of polymer: alumina = 20: 80, and two types of zirconia beads were used (0.5 mm: 1 mm = 1:1) in a ball mill, pulverized and mixed in a ball mill for 20 minutes to prepare a slurry.

The slurry prepared above was applied onto one surface of a polyethylene porous substrate using a doctor blade, and dried to produce a separator on which a coating layer was formed.

## Dispersion Stability

The slurries prepared in Examples and Comparative Example were rotated at 300 rpm using a dispersion stability analyzer (LUMiSizer, LS651), and the sedimentation rate of the slurry particles in the slurry was measured at 25°C.

## Adhesive Strength

The prepared separator was cut into a size of 15 mm * 100 mm to prepare two sheets, respectively.

The two prepared separators were overlapped each other, sandwiched between PET films of 100 $\mu$m, and then passed through a roll laminator at 100°C and adhered. At this time, it was heated at a roll laminator speed of 0.3 m/min for 30 seconds, wherein the pressure was 2 $kgf/cm^2$.

The end part of the two adhered separators was mounted onto a UTM instrument (LLOYD Instrument LF Plus), and the strength required for separating the separator adhered by applying force in both directions at a measuring speed of 100 mm/min was measured.

## Air Permeability

The air permeability was measured using a Gurley type air permeability meter in accordance with JIS P-8117 standard. At this time, the time required for 100 ml of air to pass through a diameter of 28.6 mm and an area of 645 $mm^2$ was measured.

## Air Permeability after High-Temperature Test

The separators produced in Examples and Comparative Examples were placed in an oven, placed in a vacuum

oven at 70°C, and left for about 1 hour.

Then, the separator was taken out of the oven and measured using a Gurley type air permeability meter in accordance with JIS P-8117 standard. At this time, the time required for 100 ml of air to pass through a diameter of 28.6 mm and an area of 645 mm 2 was measured.

The evaluation results are summarized in the table below.

[Table 1]

| | Adhesive strength (gf/25mm) | Dispersion stability_ ($\mu$m/sec) | Air permeability (sec/100m1) | Air permeability after high-temperature test (sec/100ml) |
|---|---|---|---|---|
| Comparative Example 1 | 76 | 14 | 211 | 553 |
| Comparative Example 2 | 50 | 12 | 181 | 185 |
| Example 1 | 81 | 14 | 201 | 217 |

Referring to Table 1, it can be confirmed that in the case of Example 1, the dispersion stability and air permeability (before high temperature test) values are not significantly different from those of Comparative Example 1 or Comparative Example 2.

However, it can be confirmed that Comparative Example 1 and Example 1 using an ethylene-vinyl acetate-based binder is greatly in the adhesive strength as compared with Comparative Example 2 using PVDF. It can be clearly confirmed that Example 1 uses a copolymer containing a functional group capable of crosslinking between molecules or between repeating units, and even after exposure to a high-temperature environment, excellent air permeability is maintained as compared with Comparative Example 1.

## Claims

1. A dispersant composition for a separator of a non-aqueous electrolyte battery, comprising a polymer containing a first repeating unit represented by the following Chemical Formula 1, a second repeating unit represented by the following Chemical Formula 2, and a third repeating unit represented by the following Chemical Formula 3:

[Chemical Formula 1]

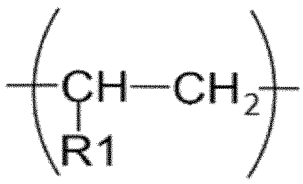

in Chemical Formula 1, R1 is hydrogen or an alkyl having 1 to 8 carbon atoms,

[Chemical Formula 2]

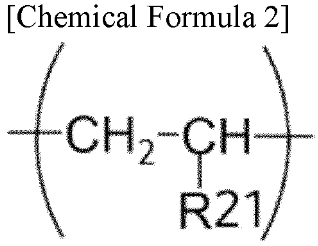

in Chemical Formula 2, R21 is an acetate ($CH_3COO$-) group,

[Chemical Formula 3]

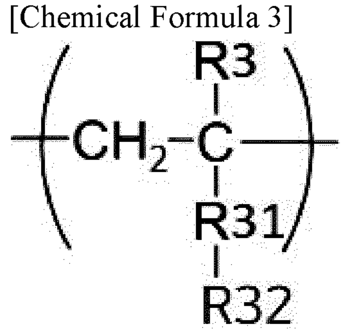

in Chemical Formula 3, R3 is hydrogen or an alkyl having 1 to 5 carbon atoms, R31 is an alkylene having 1 to 5 carbon atoms or -(C=O)O-, R32 is a group containing an unsaturated functional group,
at least a part of R32 is capable of forming a crosslinking bond with other repeating units in the copolymer.

2. The dispersant composition for a separator of a non-aqueous electrolyte battery according to claim 1, wherein the R32 comprises one or more unsaturated functional groups selected from the group consisting of a vinyl group, a (meth)acrylate group, an oxetanyl group, and a glycidyl group.

3. The dispersant composition for a separator of a non-aqueous electrolyte battery according to claim 2, wherein the R32 comprises one or more selected from the group consisting of the following Chemical Formulas:

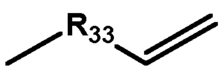 , 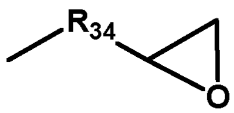 , 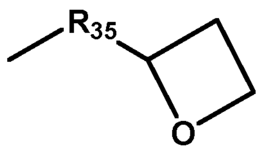 ,

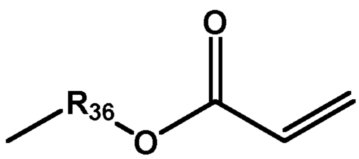 , and 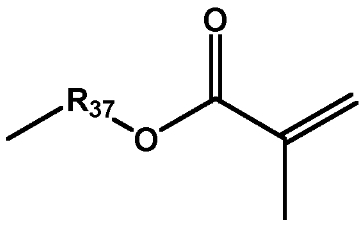

wherein, R33 to R37 are each independently a single bond, or a linear or branched alkylene having 1 to 5 carbon atoms.

4. The dispersant composition for a separator of a non-aqueous electrolyte battery according to claim 1, wherein a ratio of the repeating number of the first repeating unit to the total repeating number of the first to third repeating units in the polymer is 0.01 to 0.5.

5. The dispersant composition for a separator of a non-aqueous electrolyte battery according to claim 1, wherein a ratio of the repeating number of the second repeating unit to the total repeating number of the first to third repeating units in the polymer is 0.4 to 0.95.

6. The dispersant composition for a separator of a non-aqueous electrolyte battery according to claim 1, wherein a ratio of the repeating number of the third repeating unit to the total repeating number of the first to third repeating units in the polymer is 0.01 to 0.3.

7. The dispersant composition for a separator of a non-aqueous electrolyte battery according to claim 1, wherein a weight average molecular weight of the polymer is 100,000 to 1,000,000.

8. The dispersant composition for a separator of a non-aqueous electrolyte battery according to claim 1, which further comprises an inorganic filler.

**9.** The dispersant composition for a separator of a non-aqueous electrolyte battery according to claim 8, wherein the inorganic filler comprises one or more selected from the group consisting of inorganic oxides, inorganic nitrides, poorly soluble ionic crystal fine particles, covalently bonded crystals, clay, materials derived from mineral resources, and lithium titanium phosphate.

**10.** A separator of a non-aqueous electrolyte battery, the separator comprising: a porous substrate, and a heat resistant porous layer formed on one surface of the porous substrate,
wherein the heat resistant porous layer comprises the dispersant composition for a separator of a non-aqueous electrolyte battery as set forth in claim 1.

**11.** The separator of a non-aqueous electrolyte battery according to claim 10, wherein the porous substrate comprises one or more resins selected from the group consisting of a polyolefin resin, a polyester resin, a polyacetal resin, a polyamide resin, a polycarbonate resin, a polyimide resin, a polyetheretherketone resin, and a polyethersulfone resin.

**12.** A non-aqueous electrolyte battery comprising: a positive electrode, a negative electrode, the separator of a non-aqueous electrolyte battery as set forth in claim 10, and an electrolyte solution.

**INTERNATIONAL SEARCH REPORT**

International application No.
**PCT/KR2021/015638**

**A. CLASSIFICATION OF SUBJECT MATTER**

**H01M 50/409**(2021.01)i; **H01M 50/446**(2021.01)i; **H01M 50/449**(2021.01)i

According to International Patent Classification (IPC) or to both national classification and IPC

**B. FIELDS SEARCHED**

Minimum documentation searched (classification system followed by classification symbols)

H01M 50/409(2021.01); C08J 3/20(2006.01); C08J 3/24(2006.01); H01M 10/05(2010.01); H01M 2/16(2006.01); H01M 4/62(2006.01); H01M 50/40(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 비수전해질 (non-aqueous electrolyte), 전지 (battery), 분리막 (seperator), 고분자 (polymer)

**C. DOCUMENTS CONSIDERED TO BE RELEVANT**

| Category* | Citation of document, with indication, where appropriate, of the relevant passages | Relevant to claim No. |
|---|---|---|
| X | KR 10-2012-0114342 A (MITSUBISHI PLASTICS, INC) 16 October 2012 (2012-10-16)<br>See abstract; claims 1-7; and paragraphs [0062]-[0065], [0105]-[0106], [0116], [0124]-[0126] and [0132]-[0136]. | 1-12 |
| A | KR 10-2016-0042973 A (KIMBERLY-CLARK WORLDWIDE, INC.) 20 April 2016 (2016-04-20)<br>See abstract; paragraphs [0059] and [0103]; and example 1. | 1-12 |
| A | KR 10-2019-0025571 A (SHANGHAI ENERGY NEW MATERIALS TECHNOLOGY CO., LTD.) 11 March 2019 (2019-03-11)<br>See entire document. | 1-12 |
| A | WO 2015-046191 A1 (TOYO INK SC HOLDINGS CO., LTD. et al.) 02 April 2015 (2015-04-02)<br>See entire document. | 1-12 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **09 February 2022** | **09 February 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT

International application No.
**PCT/KR2021/015638**

**C. DOCUMENTS CONSIDERED TO BE RELEVANT**

| Category* | Citation of document, with indication, where appropriate, of the relevant passages | Relevant to claim No. |
|---|---|---|
| A | DAIGLE, J. -C. et al. Novel polymer coating for chemically absorbing CO2 for safe Li-ion battery. Scientific Reports. 25 June 2020, vol. 10, pp. 1-7.<br>See entire document. | 1-12 |

Form PCT/ISA/210 (second sheet) (July 2019)

**INTERNATIONAL SEARCH REPORT**
**Information on patent family members**

International application No.
**PCT/KR2021/015638**

| Patent document cited in search report | Publication date (day/month/year) | Patent family member(s) | Publication date (day/month/year) |
|---|---|---|---|
| KR 10-2012-0114342 A | 16 October 2012 | CN 102782027 A | 14 November 2012 |
| | | CN 102782027 B | 25 May 2016 |
| | | EP 2543697 A1 | 09 January 2013 |
| | | EP 2543697 B1 | 04 January 2017 |
| | | JP 5778657 B2 | 16 September 2015 |
| | | US 2012-0329894 A1 | 27 December 2012 |
| | | WO 2011-108539 A1 | 09 September 2011 |
| KR 10-2016-0042973 A | 20 April 2016 | AU 2014-304180 A1 | 03 March 2016 |
| | | AU 2014-304180 B2 | 04 May 2017 |
| | | BR 112016002594 A2 | 01 August 2017 |
| | | BR 112016002594 B1 | 17 August 2021 |
| | | CN 105431479 A | 23 March 2016 |
| | | CN 105431479 B | 16 November 2018 |
| | | EP 3030607 A1 | 15 June 2016 |
| | | EP 3030607 B1 | 18 September 2019 |
| | | JP 2016-527374 A | 08 September 2016 |
| | | MX 2016001598 A | 27 April 2016 |
| | | MX 364108 B | 11 April 2019 |
| | | RU 2016107432 A | 04 September 2017 |
| | | SG 11201601706 A | 28 April 2016 |
| | | US 2016-0185929 A1 | 30 June 2016 |
| | | US 9957366 B2 | 01 May 2018 |
| | | WO 2015-019202 A1 | 12 February 2015 |
| KR 10-2019-0025571 A | 11 March 2019 | CN 107452919 A | 08 December 2017 |
| | | CN 107452919 B | 28 August 2020 |
| | | DK 3467904 T3 | 20 September 2021 |
| | | EP 3467904 A1 | 10 April 2019 |
| | | EP 3467904 B1 | 04 August 2021 |
| | | JP 2019-517731 A | 24 June 2019 |
| | | LT 3467904 T | 25 October 2021 |
| | | PT 3467904 T | 21 September 2021 |
| | | US 1031654 B2 | 08 June 2021 |
| | | US 2019-0157645 A1 | 23 May 2019 |
| | | WO 2017-206593 A1 | 07 December 2017 |
| WO 2015-046191 A1 | 02 April 2015 | CN 105531854 A | 27 April 2016 |
| | | CN 105531854 B | 31 October 2017 |
| | | JP 2015-088484 A | 07 May 2015 |
| | | JP 5708872 B1 | 30 April 2015 |
| | | KR 10-1868240 B1 | 15 June 2018 |
| | | KR 10-2016-0061317 A | 31 May 2016 |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020200144322
- KR 1020210148317